# EUROPÄISCHE PATENTSCHRIFT

(11) **EP 3 398 069 B1**
(45) Veröffentlichungstag und Bekanntmachung des Hinweises auf die Patenterteilung: **05.06.2019**
(21) Anmeldenummer: 18713578.5
(22) Anmeldetag: 13.03.2018
(51) Int. Cl.: G06F 11/07, G06F 11/16, G06F 11/20

(54) **FAHRZEUGEIGENE STEUERVORRICHTUNG ZUM REDUNDANTEN AUSFÜHREN EINER BETRIEBSFUNKTION SOWIE ENTSPRECHENDES KRAFTFAHRZEUG**
EMBARKED CONTROL APPARATUS FOR THE EXECUTION OF A REDUNDANT OPERATING FUNCTION AND VEHICLE COMPRISING THE SAME
DISPOSITIF DE CONTROLE EMBARQUÉ DESTINÉ À L'ÉXÉCUTION D' UNE OPÉRATION FUNCTIONELLE REDONDANTE ET VÉHICULE LE COMPORTANT

(30) Priorität: 21.03.2017 DE 102017204691
(43) Veröffentlichungstag der Anmeldung: 07.11.2018
(73) Patentinhaber: Audi AG, 85045 Ingolstadt (DE)
(72) Erfinder: Paffen, Matthijs, 85123 Karlskron (DE); Gruber, Hans-Georg, 85049 Ingolstadt (DE); Schmailzl, Michael, 85092 Kösching (DE); Isenberg, Jürgen, 91161 Hilpolstein (DE); Schieber, Reinhard, 85116 Egweil (DE); Lerzer, Jürgen, 92318 Neumarkt (DE); Zießler, Thorsten, 85290 Geisenfeld (DE)
(86) Internationale Anmeldenummer: PCT/EP2018/056235
(87) Internationale Veröffentlichungsnummer: WO 2018/172142

(56) Entgegenhaltungen:
- EP-A2- 2 386 960
- DE-A1-102005 037 262
- DE-A1-102011 082 943
- US-A1- 2014 139 670

## Beschreibung

Die Erfindung betrifft eine Steuervorrichtung zum redundanten Bereitstellen oder Ausführen einer Betriebsfunktion. Zum Ausführen der Betriebsfunktion sind zumindest zwei Prozessoreinheiten vorgesehen. Um die Betriebsfunktion ausführen zu können, muss die Prozessoreinheit, welche die Betriebsfunktion ausführt, mit zumindest einer Peripherieeinheit gekoppelt werden. Hierzu dient eine Switcheinheit (Switch - Verteilerschaltung). Zu der Erfindung gehört auch ein Kraftfahrzeug, in welchem die erfindungsgemäße Steuervorrichtung bereitgestellt ist.

Aus der WO 2014/077908 A1 ist ein Kraftfahrzeug bekannt, in welchem als Betriebsfunktion eine so genannte ADAS-Funktion (ADAS - Advanced Driver Assistance System, Fahrerassistenzsystem) mittels einer Computerplattform ausgeführt wird. Zusätzlich muss noch als Nebenfunktion eine IVI-Funktion (IVI - In-Vehicle-Infotainment) oder Infotainment-Funktion ausgeführt werden. Hierzu wird eine andere Computerplattform verwendet. Auf dieser anderen Computerplattform können zusätzlich auch Teile der ADAS-Funktion ausgeführt werden. Kernelemente der ADAS-Funktion müssen aber auf einem spezialisierten SoC (System on a Chip) ausgeführt werden. Dies hat zum Nachteil, dass bei einem Ausfall eines solchen SoC die ADAS-Funktion nicht anderweitig bereitgestellt werden kann.

Aus der US 2011/0054716 A1 ist ein Kraftfahrzeug bekannt, welches zusätzlich zu einer Navigationseinrichtung eine Recheneinrichtung zum Bereitstellen einer ADAS-Funktion aufweist. Da die ADAS-Funktion eine Vielzahl von Sensoren verwendet oder nutzt, müssen diese mit der zusätzlichen Recheneinrichtung verschaltet sein. Dadurch ist es schwierig, die ADAS-Funktion auf eine zweite Recheneinrichtung zu verlagern, da dies auch bedeutet, dass die Vielzahl der Verbindungen zu den Sensoren an der zweiten Recheneinrichtung ebenfalls bereitgestellt sein müssen.

Aus der CN 204347938 U ist ein Kraftfahrzeug-Aufnahmegerät zum Erfassen von Videodaten bekannt. Der Datenrekorder kann über eine kabellose Verbindung mit Steuergeräten des Kraftfahrzeugs gekoppelt sein.

Dokument DE 10 2011 082943 A1 beschreibt eine Netzwerkeinrichtung mit einer ersten Steuereinrichtung und einer der ersten Steuereinrichtung zugeordneten ersten Switch-Einrichtung, einer zweiten Steuereinrichtung und einer der zweiten Steuereinrichtung zugeordneten zweiten Switch-Einrichtung, wobei sich zwei unabhängige Kanäle aus Steuer- und Switch-Einrichtung ergeben, welche jeweils über eine erste und zweite Kommunikationsschnittstelle an ein Kommunikationsnetzwerk gekoppelt werden kann. Dabei umfassen die Switch-Einrichtungen jeweils mindestens zwei Ports und sind kommunikativ miteinander gekoppelt.

Ein Fahrerassistenzsystem (im folgenden ADAS genannt) kann zumindest einen Teil der Fahrzeugführung (Längsführung und/oder Querführung) oder auch die vollständige Fahrzeugführung automatisiert durchführen. Zum Bereitstellen einer solcher ADAS-Funktion ist die Rechenleistung einer Prozessoreinheit nötig. Genauso kann das Bereitstellen von Unterhaltungsfunktionen oder Infotainment-Funktionen (Infotainment - Information/Unterhaltung) Rechenleistung erfordern, sodass auch hierfür eine Prozessoreinheit nötig ist. Im Zusammenhang mit einer ADAS-Funktion ist es zusätzlich notwendig, dass diese redundant bereitgestellt wird. Bei einem Ausfall der zugeordneten Prozessoreinheit oder bei einer Wartung derselben zum Installieren eines Software-Updates, muss die ADAS-Funktion weiterhin verfügbar bleiben. Somit ist hierzu in der Regel eine redundante Auslegung der für die ADAS-Funktion bereitgestellte Prozessoreinheit nötig. In der Summe ergibt sich somit für das Bereitstellen einer ADAS-Funktion und einer Infotainment-Funktion der Bedarf an drei Prozessoreinheiten, was die Bereitstellung eines entsprechendes Kraftfahrzeugs in der Herstellung aufwendig und kostspielig macht. In einem heutigen Kraftfahrzeug der Premiumklasse können entsprechend bis zu 100 Prozessoren für die Gesamtheit der bereitgestellten Funktionen in Steuergeräten verteilt bereitgestellt sein.

Das beschriebene Problem betrifft aber nicht nur ein Kraftfahrzeug. Generell ist zum redundanten Bereitstellen einer Betriebsfunktion eine entsprechend redundante Auslegung der zum Ausführen der Betriebsfunktion benötigten Prozessoreinheit vorgesehen. Möchte man dann noch eine Nebenfunktion bereitstellen, wie die beschriebene Infotainment-Funktion, so vergrößert sich hierdurch der Hardware-Aufwand entsprechend.

Aus einer wissenschaftlichen Veröffentlichung von lan Dobson (lan Dobson, "Verkehrsfluss und Redundanz in Multiprozessor-PCIe-Backplane-Systemen", Elektronik Informationen, Ausgabe 03-2009) ist eine PCI-Konfiguration bekannt, bei welcher zwei redundante Prozessoren über mehrere Switches mit einer Peripherie vernetzt sind. Hierbei sind die Switches auch quer verbunden.

Der Erfindung liegt die Aufgabe zugrunde, zum redundanten Bereitstellen einer Betriebsfunktion und der zusätzlichen Bereitstellung einer Nebenfunktion eine ressourceneffiziente Lösung bereitzustellen.

Die Aufgabe wird durch die Gegenstände der unabhängigen Patentansprüche 1 und 15 gelöst. Vorteilhafte Weiterbildungen der Erfindung sind durch die abhängigen Patentansprüche, die folgende Beschreibung sowie die Figuren beschrieben.

Durch die Erfindung ist eine Steuervorrichtung zum redundanten Bereitstellen oder Ausführen einer Betriebsfunktion gegeben. Eine Betriebsfunktion kann beispielsweise als ein Programmodul ausgestaltet sein. Es handelt sich also um eine Software-Funktion. Die Steuervorrichtung weist zumindest eine erste Prozessoreinheit und eine zweite Prozessoreinheit auf. Des Weiteren sind mehrere Peripherieeinheiten oder Unterstützungseinheiten bereitgestellt. Ein Beispiel für eine Peripherieeinheit ist eine Anschlussschnittstelle für zum Beispiel eine Kamera. Eine Peripherieeinheit kann eine TreiberHardware zum Anschließen von zumindest einem Peripheriegerät oder einer Peripheriekomponente aufweisen. Für die erste Prozessoreinheit ist des Weiteren eine erste Switcheinheit, d.h. Verteilerschaltung oder eine Datenweiche oder eine Verbindungsmatrix, bereitgestellt. Für die zweite Prozessoreinheit ist entsprechend eine zweite Switcheinheit bereitgestellt, die von der ersten Switcheinheit verschieden ist. Jede der Prozessoreinheiten ist dabei über ihre jeweilige, zugeordnete Switcheinheit unabhängig von der jeweils anderen Switcheinheit mit einigen der Peripherieeinheiten verschaltet. Über die erste Switcheinheit kann also die erste Prozessoreinheit mit einer oder einigen der Peripherieeinheiten gekoppelt werden, ohne dass hierzu die zweite Switcheinheit nötig ist. Andersherum ist die zweite Prozessoreinheit über die zweite Switcheinheit mit einer oder einigen der Peripherieeinheiten gekoppelt, ohne dass hierzu die ersten Switcheinheit nötig ist. Die Steuervorrichtung ist nun dazu eingerichtet, in einem ersten Betriebsmodus (einem Normalmodus) die besagte Betriebsfunktion mittels der ersten Prozessoreinheit auszuführen und dabei die erste Prozessoreinheit mittels der ersten Switcheinheit mit zumindest einer von der Betriebsfunktion genutzten Peripherieeinheit zu koppeln. Mit dieser Kopplung ist gemeint, dass es sich um zumindest eine Peripherieeinheit handelt, die nur über die erste Switcheinheit erreichbar ist, also nicht über die zweite Switcheinheit. Die Steuervorrichtung ist des Weiteren dazu eingerichtet, währenddessen im Normalmodus oder ersten Betriebsmodus mittels der zweiten Prozessoreinheit eine Nebenfunktion, also ein anderes Programmmodul, auszuführen und hierbei die zweite Prozessoreinheit mittels der zweiten Switcheinheit mit zumindest einer von der Nebenfunktion genutzten Peripherieeinheit zu koppeln. Im ersten Betriebsmodus ist also die erste Prozessoreinheit für die Betriebsfunktion und die zweite Prozessoreinheit für die Nebenfunktion vorgesehen.

Um nun Redundanz zu schaffen, müsste eigentlich eine dritte Prozessoreinheit vorhanden sein, um die Betriebsfunktion im Falle eines Ausfalls (Defekt oder Wartung) der ersten Prozessoreinheit weiterbetreiben zu können. Erfindungsgemäß ist stattdessen die Steuervorrichtung dazu eingerichtet, in einem zweiten Betriebsmodus (zum Beispiel einem Wartungsmodus) die Betriebsfunktion mittels der zweiten Prozessoreinheit auszuführen und dabei die Nebenfunktion anzuhalten oder die Nebenfunktion zumindest in einem vorbestimmten reduzierten Umfang (im Vergleich zum ersten Betriebsmodus) mittels der zweiten Prozessoreinheit weiter auszuführen. Die Betriebsfunktion und die Nebenfunktion können also zusammen auf der zweiten Betriebseinheit ausgeführt werden. Hierzu wird der Umfang oder die Anzahl der durch die Nebenfunktion bereitgestellten Funktionalitäten oder Merkmale im Vergleich zum ersten Betriebsmodus verringert oder verkleinert. Nun besteht aber das Problem, dass die Betriebsfunktion zuvor über die erste Switcheinheit mit zumindest einer Peripherieeinheit verschaltet war. Von der zweiten Prozessoreinheit aus muss die Betriebsfunktion ebenfalls diese zumindest eine Peripherieeinheit erreichen können. Hierzu ist eine Koppeleinrichtung bereitgestellt, die dazu eingerichtet ist, die zweite Prozessoreinheit mit der ersten Switcheinheit zu verbinden. Die Koppeleinrichtung ist des Weiteren dazu eingerichtet, die zweite Prozessoreinheit mittels der ersten Switcheinheit mit der zumindest einen von der Betriebsfunktion genutzten Peripherieeinheit zu koppeln. Es handelt sich hierbei insbesondere um diejenige zumindest eine Peripherieeinheit, die nur über die erste Switcheinheit und nicht über die zweite Switcheinheit erreichbar ist.

Durch die Erfindung ergibt sich der Vorteil, dass lediglich zwei Prozessoreinheiten nötig sind, um eine redundant zu betreibende Betriebsfunktion (zum Beispiel eine ADAS-Funktion) und einen Nebenfunktion (beispielsweise eine Infotainment-Funktion) in der Steuervorrichtung auszuführen oder bereitzustellen. Redundanz ist dadurch gewährleistet, dass die Betriebsfunktion von der ersten Prozessoreinheit auf die zweite Prozessoreinheit gewechselt wird und hierbei die Nebenfunktion angehalten oder in reduziertem Umfang weiter ausgeführt wird. Somit sind nur zwei Prozessoreinheiten nötig, um die Betriebsfunktion redundant bereitzustellen. Im Zusammenhang mit der Erfindung ist hierbei unter einer Prozessoreinheit zu verstehen, dass diese eine oder mehrere Mikroprozessoren als CPU (Central Processing Unit) aufweisen kann. Zusätzlich können ein oder mehrere Coprozessoren, insbesondere eine oder mehrere GPUs (Graphical Processing Unit) bereitgestellt sein. Zusätzlich oder alternativ dazu können ein oder mehrere Mikrocontroller in einer Prozessoreinheit vorgesehen sein. Eine Prozessoreinheit kann also einen sogenannten Rechenknoten (Englisch: Compute Node) darstellen, in welchem mehrere Prozessoren zum Ausführen eines Programmmoduls miteinander verschaltet sein können. Auch die Peripherieeinheiten können als Peripherieknoten mit mehreren Treiber-ICs ausgestaltet sein.

Zu der Erfindung gehören auch Weiterbildungen, durch die sich zusätzliche Vorteile ergeben.

Im Zusammenhang mit der Erfindung ist unter einer Switcheinheitt insbesondere eine PCI-Express-Switcheinheit (PCI-Express - PCIe; PCI - Peripheral Component Interconnect) mit einem IC (Integrated Circuit) oder mehreren ICs für einen PCI-Express-Switch verstehen. Alternativ dazu kann eine Switcheinheit auch für andere Daten-Hochgeschwindigkeitsübertragungstechnik-Standards wie z.B. InfiniBand vorgesehen sein.

Zwei Weiterbildungen betreffen die Frage, wie die Koppeleinrichtung ausgestaltet sein kann. Die Koppeleinrichtung kann vorsehen, dass die erste Switcheinheit einen in einem Aufwärts-Modus betreibbaren Anschlussport aufweist, über welchen sie mittels einer Kommunikationsleitung mit einer Switch-Anschlussschnittstelle der zweiten Prozessoreinheit verschaltet ist. Eine andere Bezeichnung für Aufwärts-Modus ist auch Upstream-Modus. Es handelt sich um einen aufwärts-gerichteten Modus, der beim PCIe in Richtung des Root-Complex gerichtet ist. Eine Switch-Anschlussschnittelle stellt einen Downstream-Port dar, also einen Port, der in einem abwärtsgerichteten oder weg von Root-Complex gerichteten Abwärts-Modus (Downstream-Modus) betrieben wird. Im Falle PCIe wird die Switch-Anschlussschnittelle (PCIe IF) auch als "Root-Complex Port" bezeichnet. Unter einer Kommunikationsleitung ist eine elektrische Verbindung zu verstehen, die einen Draht oder mehrere Drähte und/oder eine Leiterbahn oder mehrere Leiterbahnen umfassen kann. Es kann sich also beispielsweise um mehrere Leiterbahnen und/oder Drähte zum gleichzeitigen und unabhängigen Übertragen mehrerer elektrischer Signale handeln. Die erste Switcheinheit kann also einen in einem Aufwärts-Modus betreibbaren Anschlussport aufweisen, über welchen sie mit ihrer eigenen Prozessoreinheit verschaltet ist, die hierzu ebenfalls eine Switch-Anschlussschnittstelle aufweisen kann. Die Koppeleinrichtung sieht nun vor, dass zusätzlich ein zweiter in dem Aufwärts-Modus betreibbarer Anschlussport an der ersten Switcheinheit bereitgestellt ist und mittels einer Kommunikationsleitung dieser zweite Anschlussport mit der Switch-Anschlussschnittstelle der zweiten Prozessoreinheit verschaltet ist. Die zweite Prozessoreinheit kann natürlich zusätzlich eine Switch-Anschlussschnittstelle aufweisen, über welche sie mit ihrer eigenen, d.h. der zweiten Switcheinheit an einem im Aufwärts-Modus betreibbaren Anschlussport der zweiten Switcheinheit verschaltet ist. Zusätzlich kann natürlich vorgesehen sein, dass auch kreuzweise die zweite Switcheinheit in der beschriebenen Weise mit der ersten Prozessoreinheit verschaltet ist.

Anstelle einer direkten Verschaltung der ersten Switcheinheit mit der zweiten Prozessoreinheit sieht die Koppeleinrichtung in einer alternativen Ausgestaltung vor, dass die erste Switcheinheit und die zweite Switcheinheit untereinander direkt, d.h. unter Umgehung der Prozessoreinheiten, über eine Kommunikationsleitung verschaltet sind. Jede Prozessoreinheit muss dann lediglich mit ihrer eigenen Switcheinheit direkt über eine Kommunikationsleitung verschaltet sein. Um Daten von der ersten Switcheinheit zur zweiten Prozessoreinheit zu übertragen, kann die erste Switcheinheit die Kommunikationsleitung zur zweiten Switcheinheit nutzen, sodass die zweite Switcheinheit die Daten dann an die zweite Prozessoreinheit weiterleiten kann.

Für den Fall, dass es sich bei den Switcheinheiten jeweils um eine PCI-Express-Switcheinheit handelt, ist bevorzugt vorgesehen, dass die Kommunikationsleitung, welche die beiden Switcheinheiten direkt miteinander verbindet, an einem jeweiligen Anschlussport der jeweiligen Switcheinheit angeschlossen ist und zumindest einer der Anschlussports sowohl in einem Aufwärts-Modus (Englisch: Upstream-Mode) und/oder in einem Abwärts-Modus (Englisch: Downstream-Mode) als auch währenddessen in einem Non-transparent-bridging-Modus (NTB-Modus) betreibbar ausgestaltet ist. Hierdurch muss der durch die direkte Verbindung entstehende erweiterte Adressraum zum Adressieren der Peripherieeinheiten nicht durch eine Switcheinheit allein verwaltet werden, sondern die Adressräume der beiden Switcheinheiten bleiben weiterhin getrennt. Ein im Aufwärts-Modus betriebener Anschlussport wird auch als Upstream-Port, ein im Abwärts-Modus betriebener Anschlussport als Downstream-Port bezeichnet.

Zum Umschalten der Switcheinheiten zwischen unterschiedlichen Betriebsmodi kann vorgesehen sein, dass vorbestimmte Konfigurationsdaten in ein jeweiliges Konfigurationsregister der Switcheinheiten eingestellt werden.

Für den Fall, dass die erste Switcheinheit und die zweite Switcheinheit direkt untereinander mittels einer Kommunikationsleitung verbunden sind, ist insbesondere vorgesehen, dass die erste Prozessoreinheit und die zweite Prozessoreinheit ausschließlich indirekt über diese Kommunikationsleitung für einen Datenaustausch gekoppelt sind. Es reicht also eine einzige Kommunikationsleitung aus, um sowohl die Switcheinheiten mit jeder der Prozessoreinheiten als auch die Prozessoreinheiten untereinander für einen Datenaustausch zu koppeln. So kann insbesondere vorgesehen sein, dass die erste Prozessoreinheit und die zweite Prozessoreinheit in unterschiedlichen Steuergeräten der Steuervorrichtung angeordnet sind. Es ist dann nur eine einzige Kommunikationsleitung nötig, um diese Steuergeräte für den Datenaustausch miteinander zu verbinden.

In dem zweiten Betriebsmodus, während also die zweite Prozessoreinheit die Betriebsfunktion ausführt, ist insbesondere vorgesehen, dass die Steuervorrichtung die erste Prozessoreinheit mittels der ersten Switcheinheit mit eine Speichereinheit mit zumindest einem Datenspeicher gekoppelt hält. Hier kann dann beispielsweise aus der Speichereinheit eine Software oder ein Betriebsprogramm für die erste Prozessoreinheit in die erste Prozessoreinheit übertragen werden und hierdurch die erste Prozessoreinheit beispielsweise gewartet oder mit einem Update versehen werden.

Bisher wurde beschrieben, dass in dem zweiten Betriebsmodus, also in einem Wartungsmodus beispielsweise, die Betriebsfunktion von ihrer eigentlich für den Normalmodus (erster Betriebsmodus) vorgesehenen ersten Prozessoreinheit auf die zweite Prozessoreinheit verlagert wird. Genauso kann es aber auch sein, dass die zweite Prozessoreinheit ausfällt oder gewartet werden muss. Hierzu ist dann die Steuervorrichtung bevorzugt dazu eingerichtet, in einem dritten Betriebsmodus (beispielsweise einem weiteren Wartungsmodus) die Betriebsfunktion weiterhin mittels der ersten Prozessoreinheit auszuführen und dabei die Nebenfunktion in dem vorbestimmten reduzierten Umfang mittels der ersten Prozessoreinheit weiter auszuführen. Die Koppeleinrichtung ist in diesem Fall dazu eingerichtet, die erste Prozessoreinheit mit der zweiten Switcheinheit zu verbinden und die erste Prozessoreinheit mittels der zweiten Switcheinheit mit der zumindest einen von der Nebenfunktion genutzten Peripherieeinheit zu koppeln. Es handelt sich insbesondere um zumindest eine Peripherieeinheit, die ausschließlich über die zweite Switcheinheit, und nicht über die erste Switcheinheit erreichbar ist. Somit kann auch die zweite Prozessoreinheit beispielsweise für ein Software-Update frei gemacht oder von der Nebenfunktion entlastet werden.

Bevorzugt ist auch eine sogenannte Watchdog-Funktion oder ein so genannter Health-Monitor bereitgestellt. Hierzu ist die Steuervorrichtung dazu eingerichtet, eine Verfügbarkeit der Betriebsfunktion in jedem Betriebsmodus mittels einer Überwachungsfunktion zu überprüfen. Diese Überwachungsfunktion ist die besagte Watchdog-Funktion. Somit kann ein Ausfall oder eine Betriebsstörung der Betriebsfunktion erkannt werden.

Die Steuervorrichtung kann in diesem Zusammenhang dazu eingerichtet sein, die Überwachungsfunktion sowohl mittels der ersten Prozessoreinheit als mittels der zweiten Prozessoreinheit auszuführen. Im zweiten Betriebsmodus kann dann die zweite Prozessoreinheit also sowohl die Betriebsfunktion selbst als auch die Überwachungsfunktion ausführen. Alternativ dazu kann vorgesehen sein, dass die Überwachungsfunktion mittels einer zusätzlichen, dritten Prozessoreinheit ausgeführt wird. Dies weist den Vorteil auf, dass die dritte Prozessoreinheit steht unabhängig von den anderen beiden Prozessoreinheiten betrieben werden kann und hierdurch die Überwachungsfunktion unabhängig vom Zustand der beiden Prozessoreinheiten die Betriebsfunktion überwachen kann.

In Bezug auf die beschriebenen Peripherieeinheiten kann vorgesehen sein, dass diese umfassen: zumindest eine Coprozessoreinheit und/oder zumindest eine Eingabe-Ausgabe-Einheit für Netzwerkdaten (zum Beispiel eines Internets) und/oder für Busdaten (zum Beispiel eines CAN-Bus; CAN - Controller Area Network) und/oder zumindest eine Sensorschnittstelle zum Anschließen einer Sensoreinrichtung (zum Beispiel einer Kamera und/oder eines Radar und/oder eines Lidar (und/oder zumindest eine Audioschnittstelle zum Anschließen zumindest eines Audiosystems (zum Beispiel Audioverstärker und/oder Lautsprecher und/oder ein Mikrofon) und/oder zumindest eine Graphikschnittstelle zum Anschließen zumindest einer Anzeigeeinrichtung (zum Beispiel eines Bildschirms).

Bisher ist die Erfindung allgemein für eine Steuervorrichtung zum Bereitstellen einer redundanten Betriebsfunktion beschrieben worden. Insbesondere kann die Steuervorrichtung für ein Kraftfahrzeug ausgestaltet sein. Die Betriebsfunktion kann eine ADAS-Funktion, also eine Fahrerassistenzfunktion des Kraftfahrzeugs, sein. Die Nebenfunktion kann eine Infotainment-Funktion des Kraftfahrzeugs sein, beispielsweise das Darstellen von Internetdaten und/oder das Steuern eines Medienwiedergabesystems (zum Beispiel einer MP3-Wiedergabeeinrichtung) und/oder das Steuern einer Telefonanlage des Kraftfahrzeugs.

Entsprechend ist durch die Erfindung auch ein Kraftfahrzeug mit einer Ausführungsform der erfindungsgemäßen Steuervorrichtung bereitgestellt. Das erfindungsgemäße Kraftfahrzeug ist insbesondere als Kraftwagen, bevorzugt als Personenkraftwagen oder Lastkraftwagen, ausgestaltet.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs;
- Fig. 2: eine schematische Darstellung einer Steuervorrichtung des Kraftfahrzeugs von Fig. 1 in einem ersten Betriebsmodus;
- Fig. 3: eine schematische Darstellung der Steuervorrichtung von Fig. 2 in einem zweiten Betriebsmodus;
- Fig. 4: eine schematische Darstellung der Steuervorrichtung von Fig. 2 in einem dritten Betriebsmodus;
- Fig. 5: eine schematische Darstellung einer zweiten Ausführungsform des erfindungsgemäßen Kraftfahrzeugs;

- Fig. 6: eine schematische Darstellung einer Steuervorrichtung des Kraftfahrzeugs von Fig. 5 in einem ersten Betriebsmodus;
- Fig. 7: eine schematische Darstellung der Steuervorrichtung von Fig. 6 in einem zweiten Betriebsmodus;
- Fig. 8: eine schematische Darstellung der Steuervorrichtung von Fig. 6 in einem dritten Betriebsmodus; und
- Fig. 9: eine schematische Darstellung einer dritten Ausführungsform des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

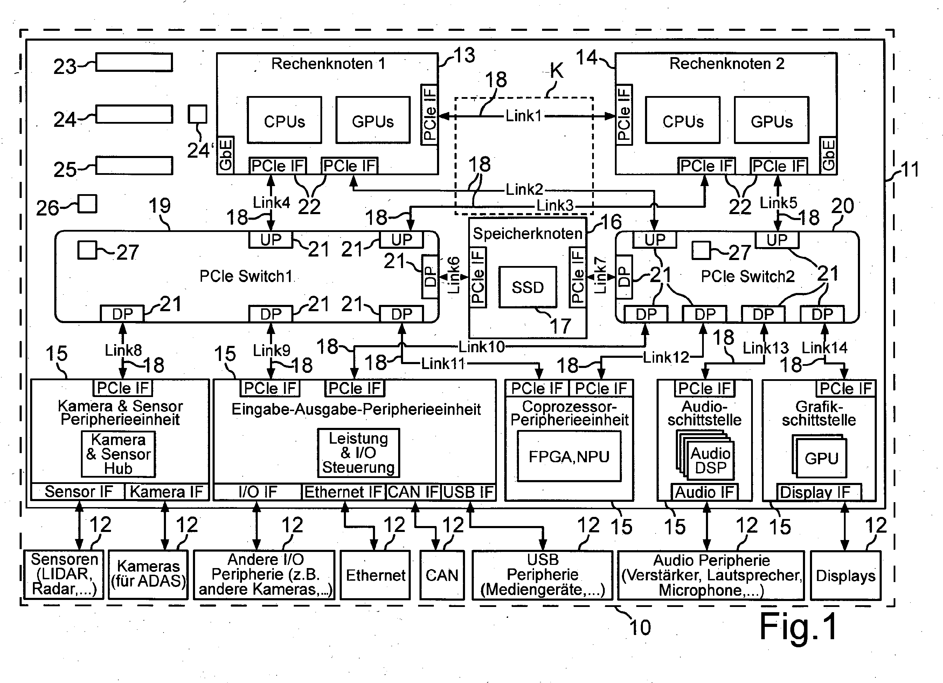

Fig. 1 zeigt ein Kraftfahrzeug 10, bei dem es sich zum Beispiel um einen Kraftwagen, insbesondere einen Personenkraftwagen oder Lastkraftwagen, handeln kann.

In dem Kraftfahrzeug 10 kann eine Steuervorrichtung 11 mit Peripheriegeräten oder Peripheriekomponenten 12 gekoppelt sein. Beispiele für die Peripheriekomponenten 12 sind in Fig. 1 angegeben. Es kann sich um Sensoren handeln, zum Beispiel Lidar oder Radar oder Kamera, ein Ethernet-Netzwerk, einen Kommunikationsbus, zum Beispiel einen CAN-Bus, zumindest ein USB-Peripheriegerät (USB - Universal Serial Bus), ein Audiosystem, zum Beispiel einen Verstärker und/oder Lautsprecher und/oder zumindest ein Mikrofon, und/oder zumindest einen Bildschirm (Display).

Die Steuervorrichtung 11 kann beispielsweise als ein einzelnes Steuergerät für das Kraftfahrzeug 10 ausgestaltet sein. Eine weiter unten noch näher beschriebene weitere Ausführungsform kann zwei Steuergeräte 11 oder mehr als zwei Steuergeräte in der Steuervorrichtung 11 vorsehen.

Die Steuervorrichtung 11 kann eine erste Prozessoreinheit 13 und eine zweite Prozessoreinheit 14 aufweisen, die hier namentlich als Rechenknoten 1 oder Compute Node 1 und als Rechenknoten 2 oder Compute Node 2 bezeichnet sind. Zum Ankoppeln der Steuervorrichtung 11 an die Peripheriekomponenten 12 kann die Steuervorrichtung 11 Peripherieknoten oder Peripherieeinheiten 15 aufweisen, in welchen jeweils die Schnittstellen-Hardware oder Treiberhardware zum Anschließen der jeweiligen Peripheriekomponente 12 bereitgestellt sein kann. Beispielsweise können die Prozessoreinheiten 13, 14 und die Peripherieeinheiten 15 auf einer gemeinsamen Leiterplatte (PCB - Printed Circuit Board) angeordnet sein. Elektrische und mechanische Anschlüsse sind in den Figuren jeweils als Schnittstelle IF (Interface) bezeichnet.

Insbesondere sind die folgenden Peripherieeinheiten vorgesehen: eine Peripherieeinheit für den Austausch von Kameradaten und Sensordaten (Camera & Sensor Node) eine Eingabe-Ausgabe-Peripherieeinheit (I/O Node), eine Coprozessor-Peripherieeinheit (Accelerator Node) eine Audioschnittstelle (Sound Node) und eine Graphikschnittstelle (Graphics Node). Durch die Coprozessoreinheit können zum Beispiel zumindest einen FPGA (Field Programmable Gate Array) und/oder NPU (Neuromorpher Prozessor) bereitgestellt sein. Die Graphikschnittstelle kann zumindest einen Grafikprozessor (GPU - Graphical Processing Unit) umfassen.

Es kann eine Speichereinheit 16 mit zumindest einem Datenspeicher 17, beispielsweise einem SSD-Speicher (SSD - Solid State Disk) bereitgestellt sein.

Um die Prozessoreinheiten 13, 14 mit den Peripherieeinheiten 15 und der Speichereinheit 16 für einen Datenaustausch miteinander zu verbinden, können Datenleitungen 18 zwischen ihnen bereitgestellt sein. Die Datenleitungen 18 sind in den Figuren mit den Bezeichnungen Link1 bis Link15 bezeichnet. Es kann sich jeweils beispielsweise um mehrere Leiterbahnen handeln oder um mehrere Drähte.

Damit nicht jede Komponente mit jeder anderen über eine eigene Kommunikationsleitung verbunden werden muss, kann für die erste Prozessoreinheit 13 eine erste Switcheinheit 19 (Switch 1) und für die zweite Prozessoreinheit 14 eine zweite Switcheinheit 20 (Switch 2) bereitgestellt sein. Insbesondere sind die Switcheinheiten 19, 20 auf einer PCIe-Technologie basierend ausgestaltet (PCIe-Switch). Zum Anschließen von Kommunikationsleitungen 18 an die Switcheinheiten 19, 20 können diese Ports 21 aufweisen, die in einem Aufwärts-Modus UP (Upstream-Port) oder einem Abwärts-Modus DP (Downstream-Port) betrieben werden können.

Zum Anschließen der Switcheinheiten 19, 20 an die Prozessoreinheiten 13, 14 können diese jeweils eine Switch-Anschlussschnittstelle 22 aufweisen.

Zum Ausführen von Programmmodulen können die Prozessoreinheiten 13, 14 jeweils eine oder mehrere CPUs (also ein CPU-Cluster) und/oder eine oder mehrere GPUs (also ein GPU-Cluster) aufweisen.

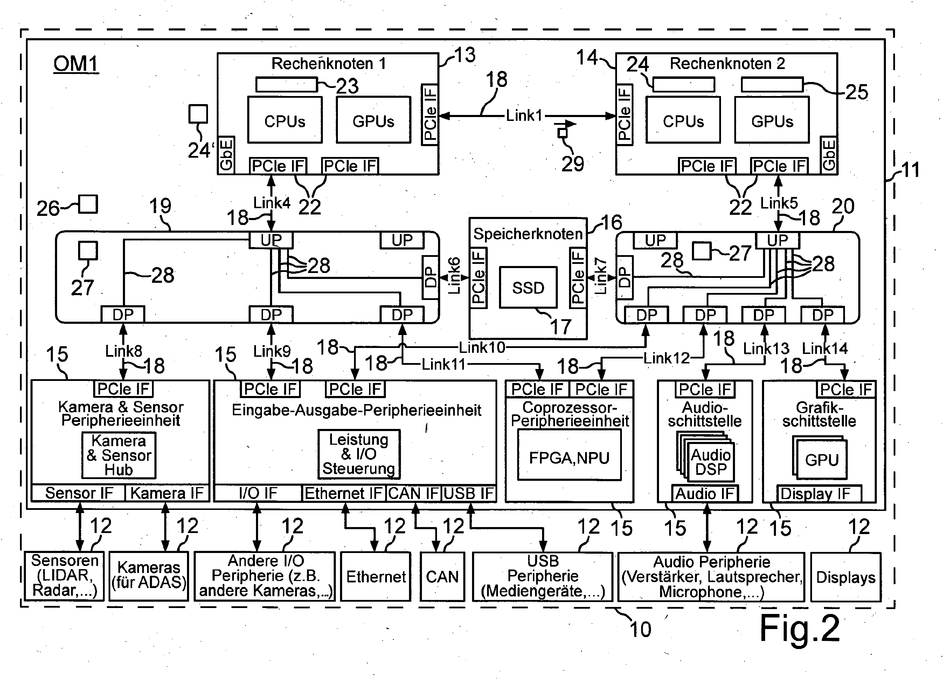

Mit der in Fig. 1 dargestellten Architektur oder Anordnung können drei unterschiedliche Betriebsmodi bereitgestellt werden, die in Fig. 2 bis Fig. 4 weiter veranschaulicht sind:
Ein erster Betriebsmodus OM1 (Normalmodus), in welchem die Prozessoreinheit 13 vollständig eine Betriebsfunktion 23, beispielsweise eine ADAS-Funktion, ausführt und Prozessoreinheit 14 vollständig eine Nebenfunktion 24, beispielsweise eine IVI-Funktion oder Infotainment-Funktion, ausführt. Des Weiteren kann noch eine Überwachungsfunktion, beispielsweise ein ADAS-Health-Monitor, auf der Prozessoreinheit 14 ausgeführt werden. Der erste Betriebsmodus OM1 ist in Fig. 2 noch einmal genauer dargestellt und wird weiter unten noch einmal erläutert.

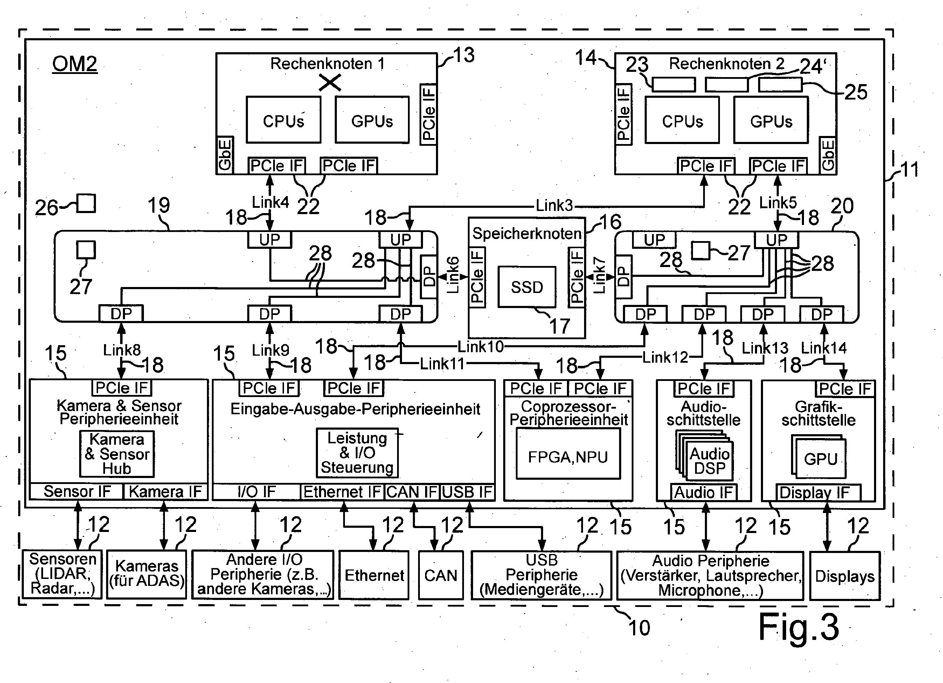

In einem zweiten Betriebsmodus OM2, einem Wartungsmodus für die Prozessoreinheit 13, ist die Prozessoreinheit 13 ausgeschaltet oder wird neu gestartet, weil sie beispielsweise einen Softwarefehler aufweist oder ein Software-Update durchgeführt werden muss. Prozessoreinheit 14 führt die Betriebsfunktion 23 vollständig aus und kann zusätzlich eine in ihrem Funktionsumfang oder in ihrer Funktionalität beschränkte Nebenfunktion 24' ausführen sowie die Überwachungsfunktion 25. Der zweite Betriebsmodus OM2 ist in Fig. 3 veranschaulicht und noch einmal weiter unten näher erläutert.

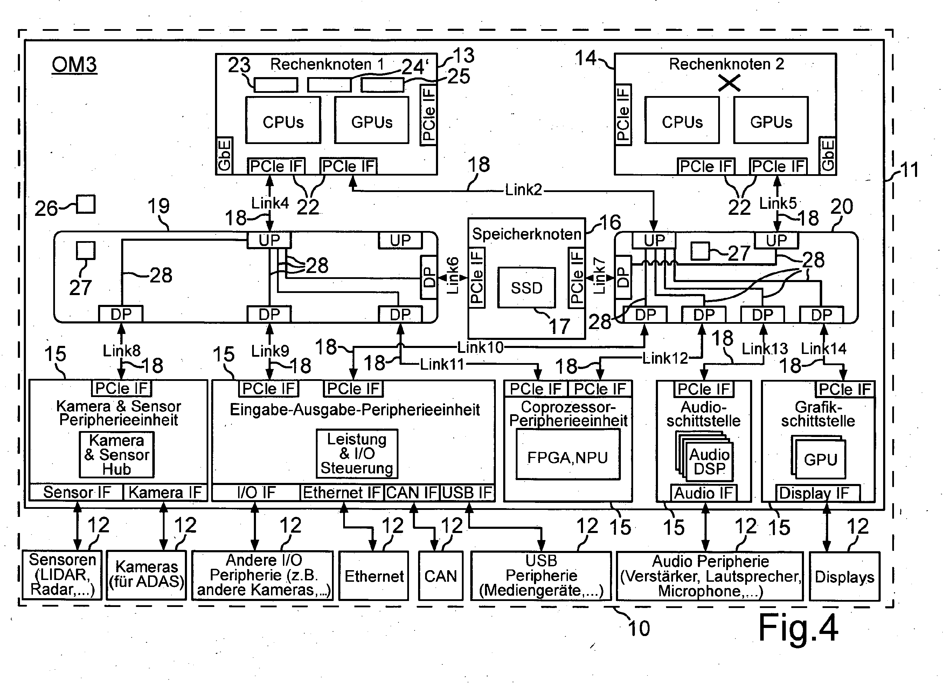

In einem dritten Betriebsmodus OM3 befindet sich die Prozessoreinheit 14 in einem Wartungsmodus. Die Prozessoreinheit 13 führt vollständig die Betriebsfunktion 23 aus sowie die limitierte Variante der Nebenfunktion 24 und die Überwachungsfunktion 25. Der dritte Betriebsmodus OM3 ist in Figur 4 veranschaulicht und wird noch näher erläutert.

Um in den drei Betriebsmodi die Prozessoreinheiten 13 und 14 mit den jeweils von den auf der jeweiligen Prozessoreinheit ausgeführten Funktionen 23, 24, 24', 25 benötigten oder genutzten Peripherieeinheiten 15 koppeln zu können, werden die Switcheinheiten 19 entsprechend auf der Grundlage von Konfigurationsdaten konfiguriert, die beispielsweise durch eine zentrale Steuereinheit 26 in ein jeweiliges Konfigurationsregister 27 der Switcheinheit 19 gespeichert werden können. Die Steuerung der Betriebsmodi OM1, OM2, OM3 und die hierfür benötigte Rekonfiguration der Switcheinheiten 19 kann beispielsweise durch eine Steuereinrichtung 26 eines Netzteils und eines Kommunikations-Controllers durchgeführt werden (Power & I/O Controller).

Fig. 2 veranschaulicht noch einmal den ersten Betriebsmodus OM1. Für die Switcheinheit 19 ist in Fig. 2 dargestellt, welche Kommunikationspfade 28 dort eingestellt sind. Des Weiteren sind die Darstellungen von Link2 und Link3 weggelassen, um zu veranschaulichen, dass diese im ersten Betriebsmodus OM1 nicht benötigt werden und/oder deaktiviert sind.

OM1 ist der Normalmodus oder Normalbetriebsmodus der Steuervorrichtung, wie er beispielsweise nach einem Start oder Boot des Systems eingenommen werden kann, wobei die Betriebsfunktion 23 auf der Prozessoreinheit 13 und die Nebenfunktion 24 auf der Prozessoreinheit 14 ausgeführt wird. Zusätzlich hierzu kann auch die Überwachungsfunktion 25 auf der Prozessoreinheit 14 zum Überwachen der korrekten Ausführung der Betriebsfunktion 23 ausgeführt werden. Hierzu kann Link1 zum Übertragen von Zustandsdaten 29 genutzt werden, also die direkte Kommunikationsleitung zwischen den beiden Prozessoreinheiten 13, 14. Diese Kommunikation, zum Beispiel zur Visualisierung von ADAS-Zuständen und Entscheidungen für die Überwachung der ADAS-Funktionalität für prädiktive Umgebungsüberwachungsdaten für Straßen und Objekte von einer Navigationsdatenbank oder von einer Kommunikationsverbindung (z.B. von einer Internet aus einer Datencloud und/oder von anderen Fahrzeugen). Während die Prozessoreinheit 13 über die erste Switcheinheit 19 mit den von der Betriebsfunktion 23 genutzten Peripherieeinheiten 15 kommuniziert, kommuniziert die Prozessoreinheit 14 über die Switcheinheit 20 mit den von der Nebenfunktion 24 genutzten Peripherieeinheiten 15. Insbesondere kommuniziert die Prozessoreinheit 13 nicht mit der Switcheinheit 20 und die Prozessoreinheit 14 nicht mit der Switcheinheit 19.

Im Folgenden wird angenommen, dass es sich bei der Betriebsfunktion um eine ADAS-Funktion oder kurz ADAS handelt und bei der Nebenfunktion beispielhaft um eine IVI-Funktion.

Fig. 3 veranschaulicht den zweiten Betriebsmodus OM2. OM2 ist der Betriebsmodus, in welchem die Prozessoreinheit 13 im Wartungsmodus ist. Dies kann durch einen erkannten Fehler oder ein erkanntes Fehlverhalten oder zur Wartung zum Update einer Software/Firmware auf der Prozessoreinheit 13 sein. Damit wird die Prozessoreinheit 13 entweder in einem Reset neu gestartet oder ausgeschaltet. Somit ist die Prozessoreinheit 13 ausschließlich mit der Speichereinheit 16 über die erste Switcheinheit 19 verschaltet oder gekoppelt.

Die zweite Prozessoreinheit 14 übernimmt die Betriebsfunktion 23. Damit ist die Betriebsfunktion 23 zusätzlich zu den ADAS-Peripherieeinheiten 15 über den Link3 verbunden. Die Nebenfunktion 24 auf der zweiten Prozessoreinheit 14 ist reduziert zu einem im Vergleich zum Normalbetrieb reduzierten Funktionsumfang, der es zumindest erlaubt, die ADAS-Zustände zu visualisieren. Eine andere Kommunikation, zum Beispiel prädiktive Umgebungsdaten von der Navigationsdatenbank oder von der Cloud oder von anderen Fahrzeugen, die zwischen dem ADAS und der IVI-Funktion ausgetauscht werden, werden ebenfalls auf der zweiten Prozessoreinheit 14 ausgeführt.

Zusätzlich ist auch die Überwachungsfunktion 25 für das ADAS auf der zweiten Prozessoreinheit 14 und damit auf derselben Prozessoreinheit wie die Betriebsfunktion 23 selbst ausgeführt. Da hierdurch die Verfügbarkeit oder Überwachung der Betriebsfunktion 23 reduziert ist, kann vorgesehen sein, den Fahrer des Kraftfahrzeugs 10 darauf hinzuweisen (beispielsweise über einen Bildschirm oder eine Anzeigeeinrichtung im Kraftfahrzeug, sich für eine eventuelle Übernahme der Fahrzeugführung bereitzuhalten.

Fig. 4 veranschaulicht den dritten Betriebsmodus. Im dritten Betriebsmodus wird die erste Prozessoreinheit 13 normal betrieben, während die zweite Prozessoreinheit 14 gewartet oder neu gestartet wird. Dies mag sein, weil ein fehlerhaftes Verhalten der zweiten Prozessoreinheit 14 detektiert wurde oder weil ein Software/Firmware-Update bei der zweiten Prozessoreinheit 13 durchgeführt werden muss. Damit wird die zweite Prozessoreinheit 13 also entweder neu gestartet oder ist ausgeschaltet. Für den dritten Betriebsmodus ist die zweite Prozessoreinheit 14 über die zweite Switcheinheit 20 ausschließlich mit der Speichereinheit 16 gekoppelt.

Die erste Prozessoreinheit 13 übernimmt die begrenzte oder limitierte Nebenfunktion 24' zur Ausführung. Damit muss die erste Prozessoreinheit 13 für die Nebenfunktion 24' mit den von der Nebenfunktion 24' genutzten Peripherieeinheiten 15 über den Link2 gekoppelt oder verschaltet sein.

Durch die Kommunikationsleitungen Link1, Link2 und Link3 ist insgesamt eine Koppeleinrichtung K zum Koppeln der Prozessoreinheiten 13, 14 untereinander und zum kreuzweise koppelnder Prozessoreinheiten 13, 14 mit der ersten Switcheinheit 19 und der zweiten Switcheinheit 20 bereitgestellt.

Die Nebenfunktion 24' ist in derselben Weise ausgestaltet und kommuniziert in derselben Weise, wie es im Zusammenhang mit Fig. 3 beschrieben worden ist. Auch die Überwachungsfunktion 25 kann durch die erste Prozessoreinheit 19 ausgeführt werden und damit auf derselben Prozessoreinheit 19, wie die Betriebsfunktion 23 selbst. Da hierdurch die hohe Verfügbarkeit der Betriebsfunktion 23 eingeschränkt ist, kann ein Fahrer in der Weise benachrichtigt werden, wie es im Zusammenhang mit Fig. 3 bereits beschrieben ist.

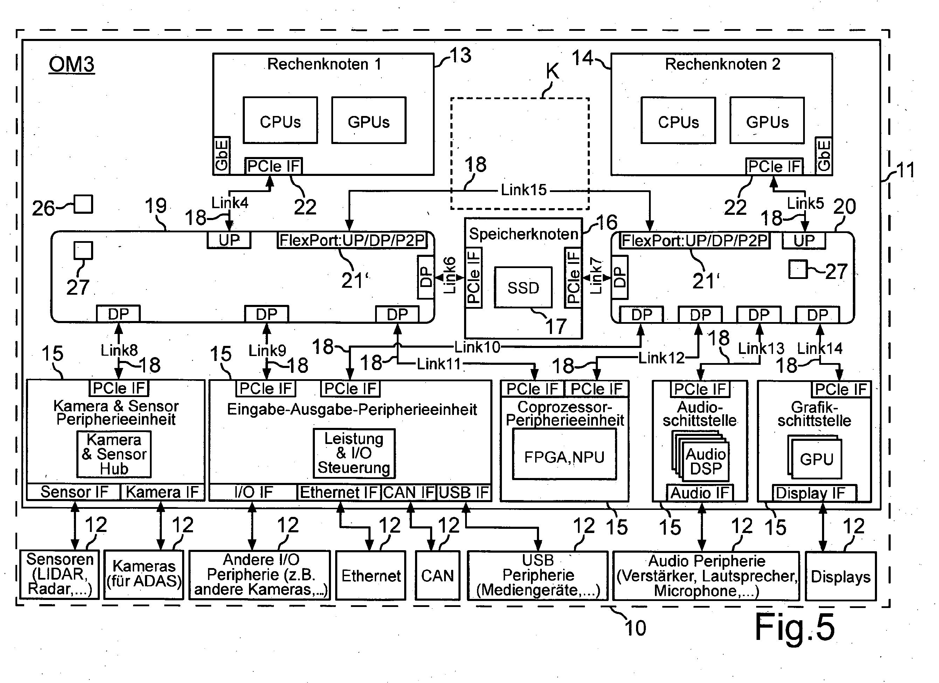

Fig. 5 zeigt ein Kraftfahrzeug 10, bei welchem die Koppeleinrichtung K weiter optimiert ist, sodass eine einzelne Kommunikationsleitung Link15 ausreicht, um die Prozessoreinheiten 19, 20 untereinander und die Switcheinheiten 19, 20 für einen Datenaustausch zu verbinden.

In den drei Betriebsmodi OM1, OM2, OM3 wird nämlich nur jeweils eine der Kommunikationsleitungen Link1, Link2, Link3 genutzt oder ist aktiv. Daher kann nun mit Link15 eine einzelne Kommunikationsleitung bereitgestellt werden die in den drei Betriebsmodi OM1, OM2, OM3 jeweils unterschiedlich genutzt werden kann. Im Zusammenhang mit der Ausführung der Switcheinheiten 19, 20 als PCI Switchports sind hierzu umschaltbare Ports 21' vorgesehen, die hier als Flexport bezeichnet sind und rekonfiguriert werden können, um sowohl die Funktion eines Upstream-Port (Aufwärts-Modus) als auch eines Downstream-Ports (Abwärts-Modus) und eines P2P-Ports (Point-2-Point-Modus) einnehmen zu können. Der P2P-Modus kann realisiert werden, indem an dem jeweils als Downstream-Port betriebenen Port 21' ein NTB-Modus (Non-Tranparent-Bridge) aktiviert oder eingestellt ist und/oder eine NTB-Funktion mit den jeweiligen Upstream-Ports der Switcheinheiten 19, 20 gekoppelt ist.

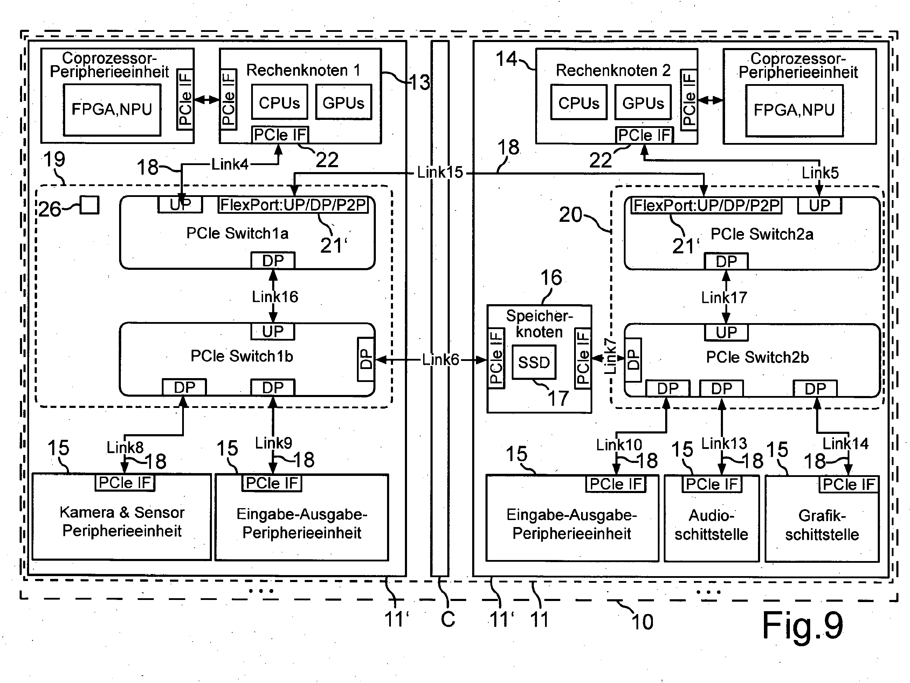

Diese weitere Reduzierung der Koppeleinrichtung K auf einen einzelnen physikalischen Link15 (Kommunikationsleitung) zwischen den Switcheinheiten 19, 20 reduziert die Zahl der Kommunikationsleitungen der Koppeleinrichtung K von 3 auf 1, was insbesondere vorteilhaft ist, wenn sich die erste Prozessoreinheit 13 und die zweite Prozessoreinheit 14 in unterschiedlichen Steuergeräten 11' befinden, was in Fig. 9 veranschaulicht ist. Figur 9 zeigt die Steuervorrichtung 11 mit zwei Steuergeräten 11', die über ein PCIe-Kabel C verbunden sind, durch welches der Link15 und der Link6 gebildet sein können. Eine weitere Bereitstellung von Kommunikationsleitungen zwischen den Steuergeräten 11' ist dann nicht nötig.

Hierdurch können Bereitstellungskosten und Gewicht gespart werden.

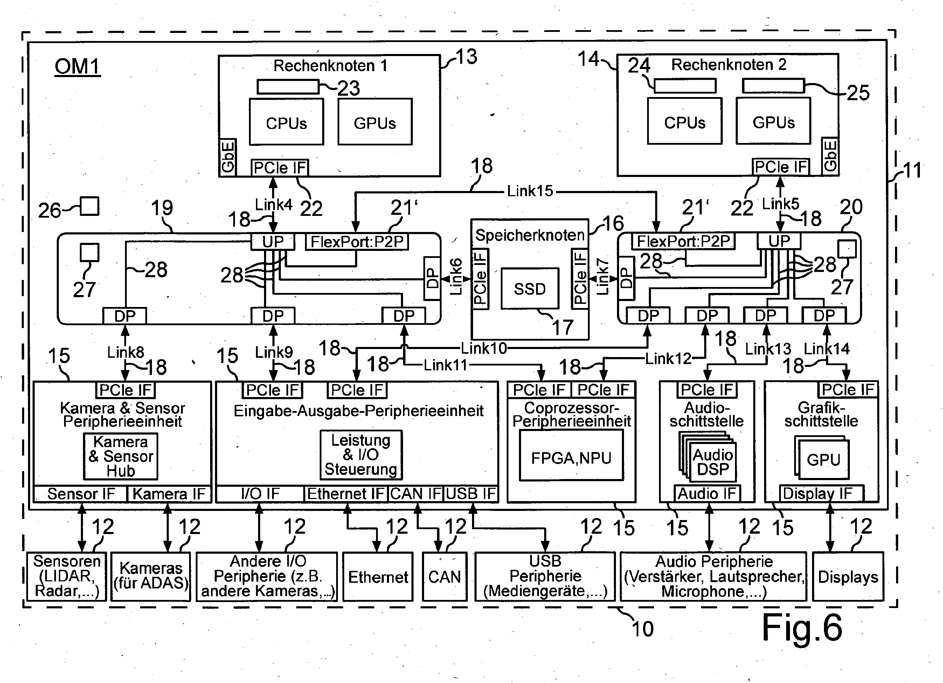

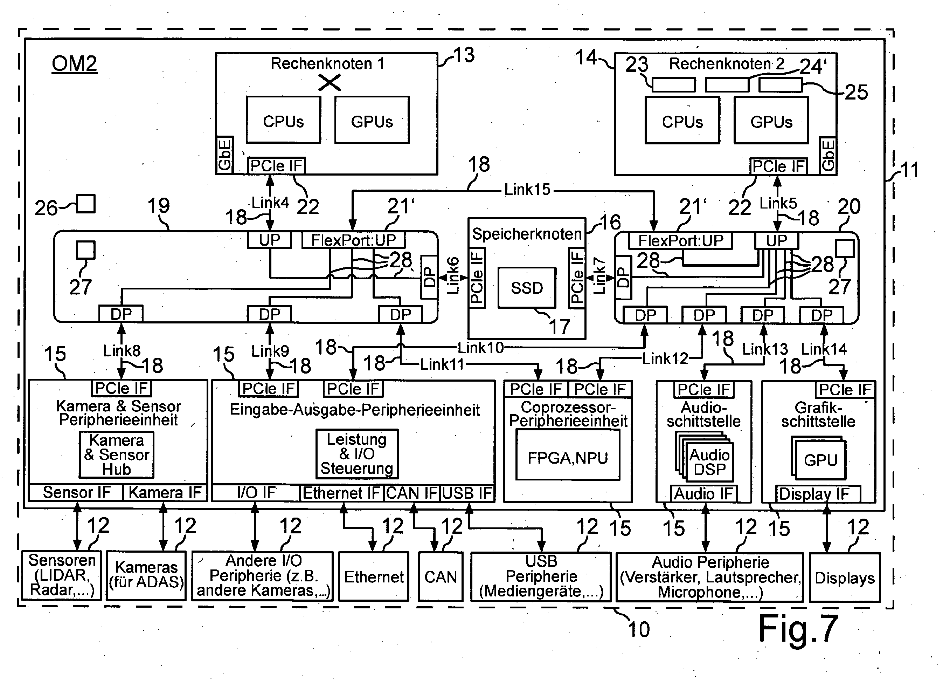

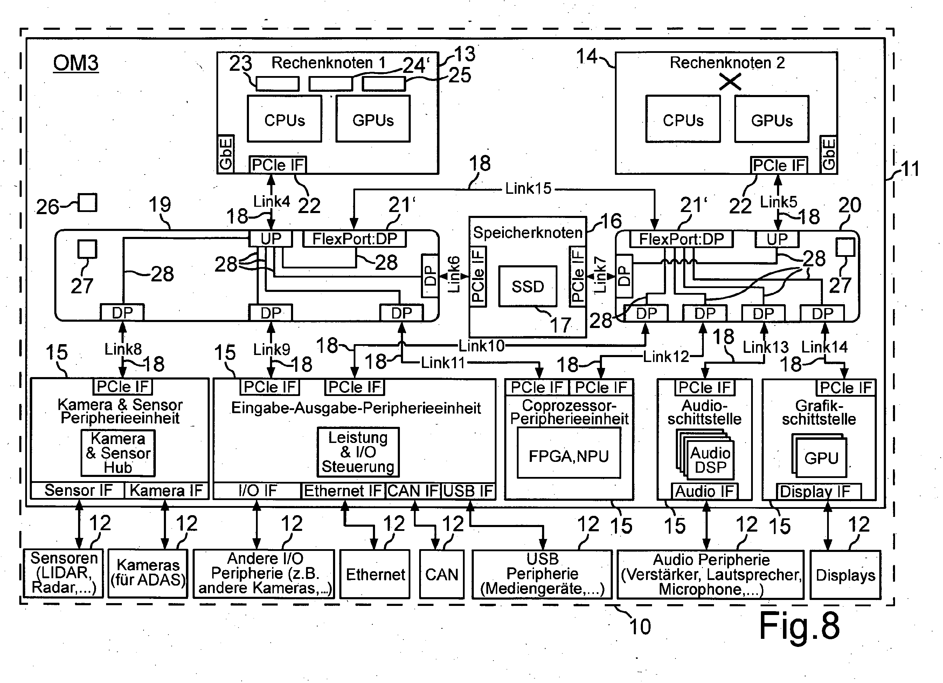

Fig. 6 zeigt die Konfiguration der Switcheinheiten 19, 20 für den ersten Betriebsmodus OM1. Fig. 7 zeigt die Konfiguration der Switcheinheiten 19, 20 für den zweiten Betriebsmodus OM2. Fig. 8 zeigt die Konfiguration der Switcheinheiten 19, 20 für den dritten Betriebsmodus OM3.

Durch die Erfindung ergeben sich insbesondere folgende Vorteile.

Das Aufteilen der Rechenleistung zwischen der Redundanz für die Betriebsfunktion 23 einerseits und der Nebenfunktion 24 andererseits braucht weniger Rechenressourcen, nämlich nur zwei Prozessoreinheiten, als für den Fall, dass die Redundanz mittels einer dritten Recheneinheit bereitgestellt würde. Dies verringert Kosten, Platzbedarf, Gewicht und Energieverbrauch.

Die Reallokation der Rechenleistung zwischen der Betriebsfunktion 23 und der Nebenfunktion 24 mittels der drei Betriebsmodi OM1, OM2, OM3, kann für einen Ausfall einer der Prozessoreinheiten oder auch für ein Loadbalancing verwendet werden.

Die verallgemeinerte Architektur für die Betriebsfunktion 23 und die Nebenfunktion 24 (das heißt der symmetrische Aufbau), vereinfacht das Erstellen von Betriebsfunktionen und Nebenfunktionen und das Entwickeln entsprechender Software, in dem standardisierte Methoden verwendet werden können, wie sie in der Telekommunikation und auf Server-Farmen verwendet werden können. Zudem lässt sich die dargestellte Architektur um weitere Prozessoreinheiten skalieren also erweitern, indem mit jeder Prozessoreinheit eine zugehörige Switcheinheit bereitgestellt wird.

Durch die Optimierung, wie sie im Zusammenhang mit Fig. 5 bis Fig. 8 beschrieben ist, ergeben sich weitere zusätzliche Vorteile, die insbesondere die folgenden sind.

Die Reduktion der physikalischen PCIe-Links zwischen Prozessoreinheit 13/Switcheinheit 19 einerseits und Prozessoreinheit 14/Switcheinheit 20 ist von drei auf eins reduziert, was zu folgenden Einsparungen führt, zum Beispiel in Sachen Kosten, Platzbedarf und Gewicht: zwei weniger Kommunikationsleitungen, zwei weniger Switch-Anschlussports für sowohl die erste Prozessoreinheit 13 als auch die zweite Prozessoreinheit 14.

Die Reduktion auf einen einzigen Link15 ist insbesondere wichtig für den Fall, der in Fig. 9 dargestellt ist, bei dem die Prozessoreinheiten 13, 14 auf unterschiedlichen Steuergeräten 11' bereitgestellt sind, wie dies beispielsweise zur Erhöhung der Betriebssicherheit oder Ausfallsicherheit vorgesehen sein kann. Hier kann der das benötigte Kabel C mit weniger Kosten und Gewicht ausgelegt oder hergestellt werden.

Diese Lösung erfordert lediglich die beschriebenen umschaltbaren Ports die hier als Flexport bezeichnet sind.

Weitere Optimierungen können wie folgt vorgenommen werden.
1. PCIe ist nur eine bevorzugte Verbindungsart, die aber auch zum Beispiel durch Verbindungen wie InfiBand oder einen On-die-Chip-2-Chip-Link ähnlich zu CCIX oder UPI-Link ersetzt werden kann.
2. Eine andere Optimierung wäre die Nutzung von TSV-Technologie (TSV - Through-Silicon-Vias) um den gezeigten SSD-Speicher auf einem Systemon-Chip (SoC) innerhalb jeder Prozessoreinheit direkt jeweils anzubringen. Hierdurch hätte dann jede Prozessoreinheit ihren eigenen SSD-Speicher, der auf das SoC aufgebracht oder angeordnet wäre.
3. Anstelle einer Überwachungsfunktion 25, die auf der jeweiligen Prozessoreinheit 13, 14 ausgeführt wird, kann eine dritte Prozessoreinheit für das Ausführen der Überwachungsfunktion 25 vorgesehen sein.
4. Es kann auch sichergestellt werden, dass die Betriebsfunktion 23 stets vollständige Redundanz aufweist, also in jedem Betriebsmodus.

Hierzu kann zusätzlich zur ersten Prozessoreinheit 13 eine weitere Prozessoreinheit vorgesehen sein, die zusammen mit der Prozessoreinheit 13 zum Beispiel mit der Switcheinheiten 19 verschaltet ist. Dann könnte abwechselnd die erste Prozessoreinheit 13 und diese weitere Prozessoreinheit abwechselnd die Betriebsfunktion 23 ausführen, um die jeweils verbleibende Prozessoreinheit in der beschriebenen Weise in einem Wartungsmodus neu starten und/oder mit neuer Software/Firmware auszustatten. Für die vollständige Redundanz kann dann die Betriebsfunktion 23 gleichzeitig auf der zweiten Prozessoreinheit 14 zusammen mit der reduzierten Nebenfunktion 24' ausgeführt werden. Falls die zweite Prozessoreinheit 14 gewartet werden muss, kann diese als reduzierte Nebenfunktion 24' auf der ersten Prozessoreinheit 13 oder der weiteren Prozessoreinheit ausgeführt werden, zusammen mit der darauf ausgeführten jeweiligen Betriebsfunktion 23.

Genauso kann die Speichereinheit 16 zweifach ausgeführt werden, um Redundanz zu schaffen. Die zweite Speichereinheit kann ebenfalls zwei PCI-Schnittstellen aufweisen, um sie hierdurch in der in Fig. 1 für die Switcheinheit 16 gezeigten Weise mit den Switcheinheiten 19, 20 zu verbinden.

Die gezeigte Kamera und Sensor-Knoten, also die Peripherieeinheit 15 zum Anschließen von Sensoren und Kameras, kann ebenfalls zweifach ausgelegt sein. Sie kann beispielsweise im Unterschied zur gezeigten Peripherieeinheit 15 für Kameras und Sensoren an die zweite Switcheinheit 20 angeschlossen werden, also an die andere Switcheinheit als die erste Peripherieeinheit für Kamera und Sensoren. Dies erhöht die Ausfallsicherheit der ersten Betriebsfunktion 23 im Falle eines ADAS.

Fig. 9 veranschaulicht des Weiteren eine Lösung, bei welcher jede Switcheinheit 19, 20 durch mehrere PCIe-Switches realisiert ist. Es sind also mehrere integrierte Schaltkreise (ICs) in jeder der Switcheinheiten 19, 20 vorgesehen.

Allgemein ist die dargestellte Steuervorrichtung 11 nicht beschränkt auf den Einsatz in einem Kraftfahrzeug. Sie kann auch für Rechenapplikationen mit mehreren Rechenknoten oder Prozessoreinheiten vorgesehen sein, die allgemein eine Redundanz zum Bereitstellen einer Betriebsfunktion 23 vorgesehen ist wobei eine Kommunikation zwischen den Prozessoreinheiten und zugehörigen Peripherieeinheiten nötig ist, die von der Betriebsfunktion 23 genutzt werden.

Insgesamt zeigen die Beispiele, wie durch die Erfindung eine ressourceneffiziente Fahrzeug-Computerarchitektur bereitgestellt werden kann.

## Patentansprüche

1. Steuervorrichtung (11) zum redundanten Ausführen einer Betriebsfunktion (23), wobei die Steuervorrichtung (11) zumindest eine erste Prozessoreinheit (13) und eine zweite Prozessoreinheit (14) und mehrere Peripherieeinheiten (15) aufweist und für die erste Prozessoreinheit (13) eine erste Switcheinheit (19) und für die zweite Prozessoreinheit (14) eine zweite Switcheinheit (20) bereitgestellt ist, wobei jede der Prozessoreinheiten (13, 14) über ihre jeweilige zugeordnete Switcheinheit (19, 20) unabhängig von der jeweils anderen Switcheinheit (19, 20) mit einer oder einigen der Peripherieeinheiten (15) verschaltet ist, und wobei die Steuervorrichtung (11) dazu eingerichtet ist, in einem ersten Betriebsmodus (OM1) die Betriebsfunktion (23) mittels der ersten Prozessoreinheit (13) auszuführen und dabei die erste Prozessoreinheit (13) mittels der ersten Switcheinheit (19) mit zumindest einer von der Betriebsfunktion (23) genutzten Peripherieeinheit (15) zu koppeln und währenddessen mittels der zweiten Prozessoreinheit (14) eine vorbestimmte Nebenfunktion (24) auszuführen und die zweite Prozessoreinheit (14) mittels der zweiten Switcheinheit (20) mit zumindest einer von der Nebenfunktion (24) genutzten Peripherieeinheit (15) zu koppeln,
**dadurch gekennzeichnet, dass**
die Steuervorrichtung (11) dazu eingerichtet ist, in einem zweiten Betriebsmodus (OM2) die Betriebsfunktion (23) mittels der zweiten Prozessoreinheit (14) auszuführen und dabei die Nebenfunktion (24) in einem vorbestimmten reduzierten Umfang (24') mittels der zweiten Prozessoreinheit (14) weiter auszuführen, wobei eine Koppeleinrichtung (K) bereitgestellt ist, die dazu eingerichtet ist, die zweite Prozessoreinheit (14) mit der ersten Switcheinheit (19) zu verbinden und die zweite Prozessoreinheit (24) mittels der ersten Switcheinheit (19) mit der zumindest einen von der Betriebsfunktion (23) genutzten Peripherieeinheit (15) zu koppeln.

2. Steuervorrichtung (11) nach Anspruch 1, wobei jede Switcheinheit (19, 20) jeweils eine PCI-Express-Switcheinheit ist.

3. Steuervorrichtung (11) nach einem der vorhergehenden Ansprüche, wobei die Koppeleinrichtung (K) vorsieht, dass die erste Switcheinheit (19) einen in einem Aufwärts-Modus (UP) betreibbaren Anschlussport (21) aufweist, über welchen sie mittels einer Kommunikationsleitung (18) mit einer Switch-Anschlussschnittelle (PCIe IF) der zweiten Prozessoreinheit (14) verschaltet ist.

4. Steuervorrichtung (11) nach Anspruch 1 oder 2, wobei die Koppeleinrichtung (K) vorsieht, dass die erste Switcheinheit (19) und die zweite Switcheinheit (20) untereinander direkt über eine Kommunikationsleitung (Link15) verschaltet sind.

5. Steuervorrichtung (11) nach Anspruch 4 in dessen Rückbezug auf Anspruch 2, wobei die Kommunikationsleitung (Link15) an einen jeweiligen Anschlussport (FlexPort) der jeweiligen Switcheinheit (19, 20) angeschlossen ist und zumindest einer der Anschlussports (FlexPort) sowohl in einem Aufwärts-Modus (UP) und/oder Abwärts-Modus (DP) als auch währenddessen in einem Non-Transparent-Bridging-Modus, NTB-Modus, betreibbar ausgestaltet ist.

6. Steuervorrichtung (11) nach einem der Ansprüche 4 oder 5, wobei die erste Prozessoreinheit (13) und die zweite Prozessoreinheit (14) ausschließlich indirekt über die Kommunikationsleitung (Link15) für einen Datenaustausch gekoppelt sind.

7. Steuervorrichtung (11) nach einem der vorhergehenden Ansprüche, wobei die Steuervorrichtung (11) dazu eingerichtet ist, im zweiten Betriebsmodus (OM2) die erste Prozessoreinheit (13) mittels der ersten Switcheinheit (19) mit einer Speichereinheit (16) zu koppeln.

8. Steuervorrichtung (11) nach einem der vorhergehenden Ansprüche, wobei die erste Prozessoreinheit (13) und die zweite Prozessoreinheit (14) in unterschiedlichen Steuergeräten (11') der Steuervorrichtung (11) angeordnet sind.

9. Steuervorrichtung (11) nach einem der vorhergehenden Ansprüche, wobei die Steuervorrichtung (11) dazu eingerichtet ist, in einem dritten Betriebsmodus (OM3) die Betriebsfunktion (23) mittels der ersten Prozessoreinheit (13) auszuführen und dabei die Nebenfunktion (24) in dem vorbestimmten reduzierten Umfang (24') mittels der ersten Prozessoreinheit (13) weiter auszuführen, wobei die Koppeleinrichtung (K) dazu eingerichtet ist, die erste Prozessoreinheit (13) mit der zweiten Switcheinheit (20) zu verbinden und die erste Prozessoreinheit (13) mittels der zweiten Switcheinheit (20) mit der zumindest einen von der Nebenfunktion (24) genutzten Peripherieeinheit (15) zu koppeln.

10. Steuervorrichtung (11) nach einem der vorhergehenden Ansprüche, wobei die Steuervorrichtung (11) dazu eingerichtet ist, eine Verfügbarkeit der Betriebsfunktion (23) in jedem Betriebsmodus (OM1, OM2, OM3) mittels einer Überwachungsfunktion (25) zu prüfen.

11. Steuervorrichtung (11) nach Anspruch 10, wobei die Steuervorrichtung (11) dazu eingerichtet ist, die Überwachungsfunktion (25) a) sowohl mittels der ersten Prozessoreinheit (14) als auch mittels der zweiten Prozessoreinheit (14) oder b) mittels einer zusätzlichen dritten Prozessoreinheit auszuführen.

12. Steuervorrichtung (11) nach einem der vorhergehenden Ansprüche, wobei jede Switcheinheit (19, 20) jeweils einen Switch-IC oder mehrere kaskadiert geschaltete Switch-ICs aufweist.

13. Steuervorrichtung (11) nach einem der vorhergehenden Ansprüche, wobei die Peripherieeinheiten (15) umfassen: zumindest eine Koprozessoreinheit und/oder zumindest eine Eingabe-Ausgabe-Einheit für Netzwerkdaten und/oder für Busdaten und/oder zumindest eine Sensorschnittstelle zum Anschließen einer Sensoreinrichtung und/oder zumindest eine Audioschnittstelle zum Anschließen zumindest eines Audiosystems und/oder zumindest eine Graphikschnittstelle zum Anschließen zumindest einer Anzeigeeinrichtung.

14. Steuervorrichtung (11) nach einem der vorhergehenden Ansprüche, wobei die Betriebsfunktion (23) eine ADAS-Funktion eines Kraftfahrzeugs (10) und/oder die Nebenfunktion (24) eine Infotainment-Funktion des Kraftfahrzeugs (10) ist.

15. Kraftfahrzeug (10) mit einer Steuervorrichtung (11) nach einem der vorhergehenden Ansprüche.

## Claims

1. Control device (11) for redundant execution of an operating function (23), wherein the control device (11) has at least one first processor unit (13) and one second processor unit (14) and several peripheral units (15), and a first switching unit (19) is provided for the first processor unit (13) and a second switching unit (20) is provided for the second processor unit (14), wherein each of the processor units (13, 14) is connected by means of its respective associated switching unit (19, 20), independently of the respective other switching unit (19, 20), to one or some of the peripheral units (15), and wherein the control device (11) is designed in a first operating mode (OM1) to execute the operating function (23) by means of the first processor unit (13) and in this case to couple the first processor unit (13) by means of the first switching unit (19) to at least one peripheral unit (15) used by the operating function (23) and in the meantime to execute a predetermined auxiliary function (24) by means of the second processor unit (14) and to couple the second processor unit (14) by means of the second switching unit (20) to at least one peripheral unit (15) used by the auxiliary function (24),
**characterised in that**
the control device (11) is designed in a second operating mode (OM2) to execute the operating function (23) by means of the second processor unit (14) and in this case to execute the auxiliary function (24) further in a predetermined reduced scope (24') by means of the second processor unit (14), wherein a coupling device (K) is provided which is designed to connect the second processor unit (14) to the first switching unit (19) and to couple the second processor unit (24) by means of the first switching unit (19) to the at least one peripheral unit (15) used by the operating function (23).

2. Control device (11) according to claim 1, wherein each switching unit (19, 20) is in each case a PCI express switching unit.

3. Control device (11) according to any of the preceding claims, wherein the coupling device (K) provides that the first switching unit (19) has a connection port (21) which is operable in an upward mode (UP) and via which it is connected by means of a communication line (18) to a switch connection interface (PCIe IF) of the second processor unit (14).

4. Control device (11) according to claim 1 or 2, wherein the coupling device (K) provides that the first switching unit (19) and the second switching unit (20) are connected to one another directly by means of a communication line (Link15).

5. Control device (11) according to claim 4 in its dependence upon claim 2, wherein the communication line (Link15) is connected to a respective connection port (FlexPort) of the respective switching unit (19, 20) and at least one of the connection ports (FlexPort) is designed to be operable both in an upward mode (UP) and/or downward mode (DP) and also in the meantime in a non-transparent bridging mode, NTB mode.

6. Control device (11) according to any of claims 4 or 5, wherein the first processor unit (13) and the second processor unit (14) are coupled exclusively indirectly by means of the communication line (Link15) for a data exchange.

7. Control device (11) according to any of the preceding claims, wherein the control device (11) is configured in the second mode of operation (OM2) to couple the first processor unit (13) by means of the first switching unit (19) to a storage unit (16).

8. Control device (11) according to any of the preceding claims, wherein the first processor unit (13) and the second processor unit (14) are arranged in different controllers (11') of the control device (11).

9. Control device (11) according to any of the preceding claims, wherein the control device (11) is configured in a third operating mode (OM3) to execute the operating function (23) by means of the first processor unit (13) and in this case to execute the auxiliary function (24) further in the predetermined reduced scope (24') by means of the first processor unit (13), wherein the coupling device (K) is configured to connect the first processor unit (13) to the second switching unit (20) and to couple the first processor unit (13) by means of the second switching unit (20) to the at least one peripheral unit (15) used by the auxiliary function (24).

10. Control device (11) according to any of the preceding claims, wherein the control device (11) is configured to check the availability of the operating function (23) in each mode of operation (OM1, OM2, OM3) by means of a monitoring function (25).

11. Control device (11) according to claim 10, wherein the control device (11) is configured to execute the monitoring function (25) a) both by means of the first processor unit (14) and also by means of the second processor unit (14) or b) by means of an additional third processor unit.

12. Control device (11) according to any of the preceding claims, wherein each switching unit (19, 20) in each case has a switch IC or several switch ICs connected in cascade.

13. Control device (11) according to any of the preceding claims, wherein the peripheral units (15) comprise: at least one coprocessor unit and/or at least one input/output unit for network data and/or for bus data and/or at least one sensor interface for connection of a sensor device and/or at least one audio interface for connection of at least one audio system and/or at least one graphics interface for connection of at least one display device.

14. Control device (11) according to any of the preceding claims, wherein the operating function (23) is an ADAS function of a motor vehicle (10) and/or the auxiliary function (24) is an infotainment function of the motor vehicle (10).

15. Motor vehicle (10) with a control device (11) according to any of the preceding claims.

## Revendications

1. Dispositif de commande (11) destiné à une mise en oeuvre redondante d'une fonction opérationnelle (23), dans lequel le dispositif de commande (11) comprend au moins une première unité formant processeur (13) et une deuxième unité formant processeur (14) et plusieurs unités périphériques (15), et une première unité de commutation (19) est fournie pour la première unité formant processeur (13) et une seconde unité de commutation (20) est fournie pour la deuxième unité formant processeur (14), dans lequel chacune des unités formant processeur (13, 14) est interconnectée avec une ou plusieurs des unités périphériques (15) par l'intermédiaire de son unité de commutation (19, 20) associée respective indépendamment de l'autre unité de commutation (19, 20) respective, et dans lequel le dispositif de commande (11) est conçu pour, dans un premier mode de fonctionnement (OM1), mettre en oeuvre la fonction opérationnelle (23) au moyen de la première unité formant processeur (13) et pour ainsi coupler la première unité formant processeur (13) à au moins une unité périphérique (15) utilisée par la fonction opérationnelle (23) au moyen de la première unité de commutation (19) et pour mettre en oeuvre pendant ce temps une fonction secondaire (24) prédéterminée au moyen de la deuxième unité formant processeur (14) et pour coupler la deuxième unité formant processeur (14) à au moins une unité périphérique (15) utilisée par la fonction secondaire (24) au moyen de la seconde unité de commutation (20),
**caractérisé en ce que**
le dispositif de commande (11) est conçu pour, dans un deuxième mode de fonctionnement (OM2), mettre en oeuvre la fonction opérationnelle (23) au moyen de la deuxième unité formant processeur (14), et pour ainsi mettre en outre en oeuvre la fonction secondaire (24) dans un périmètre (24') réduit prédéterminé au moyen de la deuxième unité formant processeur (14), dans lequel un dispositif de couplage (K) est fourni, qui est conçu pour relier la deuxième unité formant processeur (14) à la première unité de commutation (19) et pour coupler la deuxième unité formant processeur (24) à la au moins une unité périphérique (15) utilisée par la fonction opérationnelle (23) au moyen de la première unité de commutation (19).

2. Dispositif de commande (11) selon la revendication 1, dans lequel chaque unité de commutation (19, 20) est respectivement une unité de commutation PCI Express.

3. Dispositif de commande (11) selon l'une quelconque des revendications précédentes, dans lequel le dispositif de couplage (K) prévoit que la première unité de commutation (19) présente un port de connexion (21) pouvant être exploité en mode ascendant (UP) par l'intermédiaire duquel elle est interconnectée à une interface de connexion et de commutation (PCIe IF) de la deuxième unité formant processeur (14) au moyen d'une ligne de communication (18).

4. Dispositif de commande (11) selon la revendication 1 ou 2, dans lequel le dispositif de couplage (K) prévoit que la première unité de commutation (19) et la seconde unité de commutation (20) sont interconnectées directement par l'intermédiaire d'une ligne de communication (Link15).

5. Dispositif de commande (11) selon la revendication 4 en ce qu'elle dépend de la revendication 2, dans lequel la ligne de communication (Link15) est connecté à un port de connexion (FlexPort) respectif de l'unité de commutation (19, 20) respective et au moins un des ports de connexion (FlexPort) est conçu pour pouvoir être utilisé aussi bien dans un mode ascendant (UP) et/ou un mode descendant (DP) que dans un mode de pontage non transparent (mode NTB).

6. Dispositif de commande (11) selon les revendications 4 ou 5, dans lequel la première unité formant processeur (13) et la deuxième unité formant processeur (14) sont couplées de manière exclusivement indirecte par l'intermédiaire de la ligne de communication (Link15) en vue d'un échange de données.

7. Dispositif de commande (11) selon l'une quelconque des revendications précédentes, dans lequel le dispositif de commande (11) est conçu pour, dans le deuxième mode de fonctionnement (OM2), coupler la première unité formant processeur (13) à une unité de mémoire (16) au moyen de la première unité de commutation (19).

8. Dispositif de commande (11) selon l'une quelconque des revendications précédentes, dans lequel la première unité formant processeur (13) et la deuxième unité formant processeur (14) sont agencées au sein de différents appareils de commande (11') du dispositif de commande (11).

9. Dispositif de commande (11) selon l'une quelconque des revendications précédentes, dans lequel le dispositif de commande (11) est conçu pour, dans un troisième mode de fonctionnement (OM3), mettre en oeuvre la fonction opérationnelle (23) au moyen de la première unité formant processeur (13) et pour ainsi mettre en outre en oeuvre la fonction secondaire (24) dans le périmètre (24') réduit prédéterminé au moyen de la première unité formant processeur (13), dans lequel le dispositif de couplage (K) est conçu pour relier la première unité formant processeur (13) à la seconde unité de commutation (20) et pour coupler la première unité formant processeur (13) à la au moins une unité périphérique (15) utilisée par la fonction secondaire (24) au moyen de la seconde unité de commutation (20).

10. Dispositif de commande (11) selon l'une quelconque des revendications précédentes, dans lequel le dispositif de commande (11) est conçu pour vérifier une disponibilité de la fonction opérationnelle (23) dans chaque mode de fonctionnement (OM1, OM2, OM3) au moyen d'une fonction de surveillance (25).

11. Dispositif de commande (11) selon la revendication 10, dans lequel le dispositif de commande (11) est conçu pour mettre en oeuvre la fonction de surveillance (25) a) aussi bien au moyen de la première unité formant processeur (14) qu'au moyen également de la deuxième unité formant processeur (14) ou b) au moyen d'une troisième unité formant processeur supplémentaire.

12. Dispositif de commande (11) selon l'une quelconque des revendications précédentes, dans lequel chaque unité de commutation (19, 20) présente respectivement un circuit intégré de commutation ou plusieurs circuits intégrés de commutation commutés en cascade.

13. Dispositif de commande (11) selon l'une quelconque des revendications précédentes, dans lequel les unités périphériques (15) comprennent : au moins une unité formant coprocesseur et/ou au moins une unité d'entrée-sortie pour des données de réseau et/ou pour des données de bus et/ou au moins une interface de détection pour connecter un dispositif de détection et/ou au moins une interface audio pour connecter au moins un système audio et/ou au moins une interface graphique pour connecter au moins un dispositif d'affichage.

14. Dispositif de commande (11) selon l'une quelconque des revendications précédentes, dans lequel la fonction opérationnelle (23) est une fonction ADAS d'un véhicule automobile (10) et/ou la fonction secondaire (24) est une fonction d'info-divertissement du véhicule automobile (10).

15. Véhicule automobile (10) muni d'un dispositif de commande (11) selon l'une quelconque des revendications précédentes.
